# EUROPÄISCHE PATENTSCHRIFT

(11) **EP 2 181 495 B1**
(45) Veröffentlichungstag und Bekanntmachung des Hinweises auf die Patenterteilung: **29.08.2012**
(21) Anmeldenummer: 08784884.2
(22) Anmeldetag: 18.07.2008
(51) Int. Cl.: H02K 41/02, H02K 5/22, E05F 15/18

(54) **LINEARMOTOR-ANORDNUNG**
LINEAR MOTOR ARRANGEMENT
SYSTÈME DE MOTEUR LINÉAIRE

(30) Priorität: 16.08.2007 DE 102007038841
(43) Veröffentlichungstag der Anmeldung: 05.05.2010
(73) Patentinhaber: Dorma GmbH + Co. KG, 58256 Ennepetal (DE)
(72) Erfinder: BUSCH, Sven, 44227 Dortmund (DE)
(86) Internationale Anmeldenummer: PCT/EP2008/005905
(87) Internationale Veröffentlichungsnummer: WO 2009/021595

(56) Entgegenhaltungen:
- WO-A-2006/109510
- JP-A- 9 074 735
- JP-A- 10 025 965
- JP-A- 2003 111 380

## Beschreibung

Die Erfindung betrifft eine Linearmotor-Anordnung für entlang eines Verfahrwegs bewegbare Teile, insbesondere Schiebetürflügel, sowie eine Vorrichtung zum Montieren solch einer Anordnung.

Linearmotor-Antriebe für Schiebetüranlagen und dergleichen sind bekannt. Der Antrieb besteht im Wesentlichen aus einem Linearmotor, der entlang zumindest eines Teils eines Verfahrwegs eines jeweiligen Schiebetürflügels erstreckend angeordnet ist. Solch ein Antrieb ermöglicht eine enorm platzsparende Montage. Ein Trageprofil nimmt üblicherweise zumindest einen Stator zumindest eines Linearmotors auf. Zugehörige Läufer sind an einem jeweiligen Schiebetürflügel angebracht und können mit Rollen versehen sein, die auf Führungsschienen abrollend angeordnet sind.

Da es wünschenswert ist, Antriebe so wenig auffällig wie möglich zu gestalten, ist das Profil so bemessen, dass es wenig größer als Außenabmessungen des jeweiligen Linearmotors im Querschnitt ist. Dies bedeutet, dass alle anderen Komponenten, wie beispielsweise Steuerung und Netzteil, in Längsrichtung des Profils gesehen, mit den Statoren in einer Reihe hintereinander angeordnet werden müssen.

Dabei stellt sich allerdings das Problem der Verkabelung von einem beispielsweise Energieversorgungsanschluss von außen zu einer Komponente, die aus Platzgründen an einem dem Anschluss entfernten Ende eines Stators angeordnet ist.

Aufgabe der Erfindung ist es daher, eine Anordnung eines Linearmotors zu schaffen, die minimale Abmessungen des Linearantriebs ermöglicht. Eine andere Aufgabe der Erfindung besteht darin, eine Montage für solch eine Linearmotor-Anordnung bereitzustellen.

Die erste Aufgabe wird durch den Gegenstand des Anspruchs 1 gelöst. Die zweite Aufgabe wird durch den Gegenstand des Patentanspruchs 17 gelöst. Vorteilhafte Weiterbildungen der Erfindung sind in den jeweiligen Unteransprüchen angegeben.

Eine erfindungsgemäße Anordnung für einen Linearantrieb weist als Komponenten zumindest ein Statortell eines Linearmotors und ein Anschlussteil auf. Das Anschlussteil umfasst im Wesentlichen eine Schaltung, die beispielsweise ein Filterteil oder eine Ansteuerschaltung sein kann. Die Komponenten sind hintereinander in einer Reihe angeordnet. Das Anschlussteil weist ferner ein Gehäuse auf, das einerends zumindest eine Anschlussmöglichkeit für eine externe Energieversorgung aufweist. Zudem ist das Gehäuse bzw. das Anschlussteil erfindungsgemäß eingerichtet, eine Schaltung aufzunehmen, die zusätzliche Anschlüsse aufweist. Um Anschlussleitungen im Anschlussteil verlegen zu können, ist im Gehäuse ein Kanal derart ausgebildet, dass sie an dem Ende der Anschlussmöglichkeit aus dem Gehäuse heraus geführt sind. Damit bildet das Anschlussteil die einzige Schnittstelle nach außen, womit eine einfache und sichere Möglichkeit geschaffen ist, den Linearantrieb anzuschließen.

Das Aufnahmeprofil weist vorzugsweise Befestigungseinrichtungen für eine Montage auf. Im einfachsten Fall sind dies Durchgangsöffnungen, durch die hindurchgehend Befestigungsschrauben unter Nutzung von Dübeln in eine Wand bzw. unter Nutzung von Muttern oder Innengewindeabschnitten eines Anbringprofils an diesem angeschraubt sind. Das Anschlussgehäuse weist an Stellen, an denen das Aufnahmeprofil derartige Befestigungseinrichtungen aufweist, Durchgangsöffnungen auf, die sich jeweils von einer dem Aufnahmeprofil abgewandten Außenseite des Anschlussgehäuses zu einer dem Aufnahmeprofil zugewandten Außenseite des Anschlussgehäuse hindurchgehend ausgebildet sind. Damit sind die besagten Befestigungsschrauben auch bei montiertem Aufnahmeprofil zugänglich, was es beispielsweise besonders einfach macht, den gesamten Linearantrieb abzunehmen bzw. gelöste Befestigungsschrauben nachzuziehen.

Vorzugsweise weisen die Durchgangsöffnungen jeweils einen umiaufenden Wandabschnitt auf, der die jeweilige Durchgangsöffnung von einem Innenraum des Anschlussgehäuses separiert und sich in den Innenraum des Anschlussteils hinein erstreckt. Es entstehen somit hülsenförmige Durchgangsöffnungen. Dies vermindert die Gefahr, dass beispielsweise eine Befestigungsschraube in den Innenraum des Anschlussteils gerät und dadurch beispielsweise Kurzschlüsse hervorgerufen werden können.

Die vorgenannten zusätzlichen Anschlüsse sind vorzugsweise auf einer Platine angeordnet, die im Bereich der vorgenannten Durchgangsöffnungen des Anschlussgehäuses ebenfalls Durchgangsöffnungen aufweist. Die Durchgangsöffnungen sind ähnlich den Durchgangsöffnungen des Anschlussteils ausgebildet. Bei vorhandenen Wandabschnitten erstrecken diese sich durch die Durchgangsöffnung der Platine hindurch. Alternativ stoßen die Wandabschnitte jeweils von einer Seite an die jeweilige Durchgangsöffnung der Platine an und bilden mit dieser eine Ausnehmung in Form einer Hülse.

Auf der Platine sind weiterhin vorzugsweise Bedienelemente beispielsweise in Form von Schaltern, Tastern, Potentiometern, und ggf. Anzeigen angeordnet. Das Gehäuse weist an einer Außenseite, zu der die Bedienelemente und etwaige Anzeigen von der Platine her hin gerichtet sind, Durchgangsöffnungen auf, sind also von außen zugänglich. Dadurch sind auch nach einer Montage etwaige Einstellungen am Linearantrieb möglich. Ferner bildet das Anschlussteil eine Anschluss- und Einstellzentrale, sodass es für einen Nutzer nicht notwendig ist, an verschiedenen Stellen des Linearantriebs Einstellungen vorzunehmen oder Überprüfungen vorzunehmen, die mittels Anzeigen optisch getätigt werden.

Das Anschlussteil weist vorzugsweise ferner zumindest an einem der Anschlussmöglichkeit abgewandten Ende zumindest einen Anschluss für einen Stator des zumindest einen Linearmotors auf. Damit ist es möglich, das Anschlussteil mit zumindest einem Statorteil zu koppeln, sodass damit der Linearantrieb, ohne Läuferteile, einfach bildbar ist. Das Anschlussteil bleibt weiterhin die einzige Anschlussmöglichkeit nach außen. Vorteilhafterweise ist die Schaltung nahe der Anschlussmöglichkeit des erfindungsgemäßen Anschlussteils angeordnet.

Das Anschlussgehäuse weist erfindungsgemäß ferner zumindest eine Leitungsdurchführung auf. Jede Leitungsdurchführung weist vorzugsweise Stege auf, die sich in einem Innenraum des Anschlussgehäuses quer zu einer Längserstreckung des Anschlussgehäuses erstrecken und Ausnehmungen oder Durchgangsöffnungen aufweisen, die jeweils gemäß Außenabmessungen zu verlegender Leitungen und/oder Kabel ausgebildet sind. Damit ist ein sicheres und dauerhaftes Verlegen zu verlegender Leitungen im Anschlussteil möglich. An jeder Leitungsdurchführung sind vorzugsweise an einer jeweiligen Außenseite Deckelteile angeordnet, die in ihrem Bereich jeweilige Leitungsdurchführung(en) nach außen abdecken. Die Deckelteile bilden einen Herausfallschutz in Bezug auf die verlegten Leitungen, erhöht somit die Sicherheit.

Die Deckelteile sind vorzugsweise an dem Gehäuse lösbar angeordnet. Dies ermöglicht eine Entnahme oder ein Hinzufügen von Leitungen, auch wenn das Anschlussteil montiert ist. Die lösbare Anordnung erfolgt vorzugsweise mittels Klemmens der Deckelteile am Gehäuse des Anschlussteils.

Das Anschlussteil ist vorzugsweise an einer Offenseite einer Schiebetüranlage angeordnet, wobei das Ende des Anschlussteils mit der Anschlussmöglichkeit ein Ende des gesamten Linearantriebs bildet. Die Ansteuerschaltung bildet vorzugsweise ein anderes Ende des Linearantriebs. Vorzugsweise sind die vorgenannten Komponenten in einem Aufnahmeprofil aufgenommen. Somit wird ein Linearantriebsmodul geschaffen, was eine Montage vereinfacht.

Zum Montieren des erfindungsgemäßen Linearantriebs ist eine Montagevorrichtung vorgesehen, die ein Arretierungsteil aufweist. Das Arretierungsteil ist eingerichtet, das Aufnahmeprofil ortsfest zu positionieren. Die Montagevorrichtung umfasst ferner eine Einsetzhilfe, die an einem den einzusetzenden Komponenten zugewandten Ende des Aufnahmeprofils derart angeordnet ist, dass sie mit zumindest einer Innenfläche des Aufnahmeprofils bündig ist, auf die die Komponenten aufgeschoben werden. Zu einem dem Aufnahmeprofil abgewandten Ende hin weist die Einsetzhilfe zumindest eine rampenförmige Fläche auf. Die jeweilige rampenförmige Fläche ist in eine Richtung von dem Aufnahmeprofil weg in Bezug auf das Aufnahmeprofil nach außen geneigt. D. h. die Einsetzhilfe bildet eine Führung, mittels der die Komponenten sicher in das Führungsprofil eingeschoben werden können, was einen Zusammenbau des Linearantriebs vereinfacht und Fehler reduzieren hilft.

Ferner ist vorzugsweise eine Einschubvorrichtung vorgesehen, die eingerichtet ist, die Komponenten des Linearantriebs ortsfest aufzunehmen. Die Komponenten weisen zumindest an einer in eine Richtung weisenden Seite Aufnahmeöffnungen auf, mit denen sie auf im Querschnitt komplementär ausgebildete Aufsteckabschnitte der Einschubvorrichtung aufsteckbar sind. Damit ist ein einfaches Positionieren der Komponenten zueinander, so wie sie im Linearantrieb anzuordnen sind, möglich.

Die Aufsteckabschnitte sind vorteilhafterweise einfahrbar bzw. einziehbar ausgebildet. Damit ist es möglich, die Aufsteckabschnitte, kurz bevor die Komponenten in das Innere des Aufnahmeprofils gelangen, aus den Ausnehmungen der Komponenten wegzuziehen und damit ein Verschieben der Komponenten auf der Einschubvorrichtung zu ermöglichen.

Die Aufsteckabschnitte sind vorzugsweise aus einem magnetisierbaren Material gebildet und in eine Richtung auf eine jeweilige Aufnahmeöffnung einer der Komponenten des Linearantriebs zu verschiebbar und in Richtung jeweiliger Aufnahmeöffnung federnd gelagert sind. An einem den Aufnahmeöffnungen abgewandten Enden der Federlagerungen ist eine magnetisch erregbare Einrichtung derart angeordnet, dass ein Aktivierbaren der magnetisch erregbaren Einrichtung ein Einziehen bzw. Einfahren jeweiliger Aufsteckabschnitte bewirkt. D. h. die Federn bewirken bei fehlender Erregung der Einrichtung ein automatischen Herausfahren der Aufsteckabschnitte.

Ferner ist eine Vorschubeinrichtung vorsehbar, die einen Anschlagabschnitt aufweist. Mittels dieses Anschlagabschnitts werden die Komponenten von der Einschubvorrichtung in Richtung Aufnahmeprofil gedrückt und damit in das Aufnahmeprofil hineingeschoben. Damit ist ein automatisches Zusammensetzen von Komponenten und Anschlussteil möglich, was die Montage enorm vereinfacht.

Weitere Merkmale und Vorteile der Erfindung ergeben sich aus der nachfolgenden Beschreibung bevorzugter Ausführungsformen.

Es zeigen:
- Figur 1: eine perspektivische Ansicht eines Anschlussteils gemäß einer Ausführungsform der Erfindung in einem Offen-Zustand, gesehen von einer Unterseite,
- Figur 2: das Anschlussteil von Figur 1, gesehen von einer Oberseite,
- Figur 3: eine Platine gemäß einer Ausführungsform der Erfindung für das Anschlussteil von Figur 1,
- Figur 4: ein Deckelteil von Figur 2 in einer vergrößerten Ansicht,
- Figur 5: einen Linearantrieb in einer seitlichen Draufsicht,
- Figur 6: eine Draufsicht des Anschlussteils von Figur 1, versehen mit Anschlussleitungen,
- Figur 7: einen Längsschnitt durch das Anschlussteil von Figur 1, eingesetzt in ein an einer Wand angebrachtes Aufnahmeprofil,
- Figur 8: eine Schiebetüranlage mit einer Anordnung eines Linearantriebs gemäß einer Ausführungsform der Erfindung,
- Figur 9: eine Montagevorrichtung gemäß einer Ausführungsform der Erfindung und
- Figur 10: eine Einschubvorrichtung gemäß einer Ausführungsform der Erfindung für die Montagevorrichtung von Figur 9.

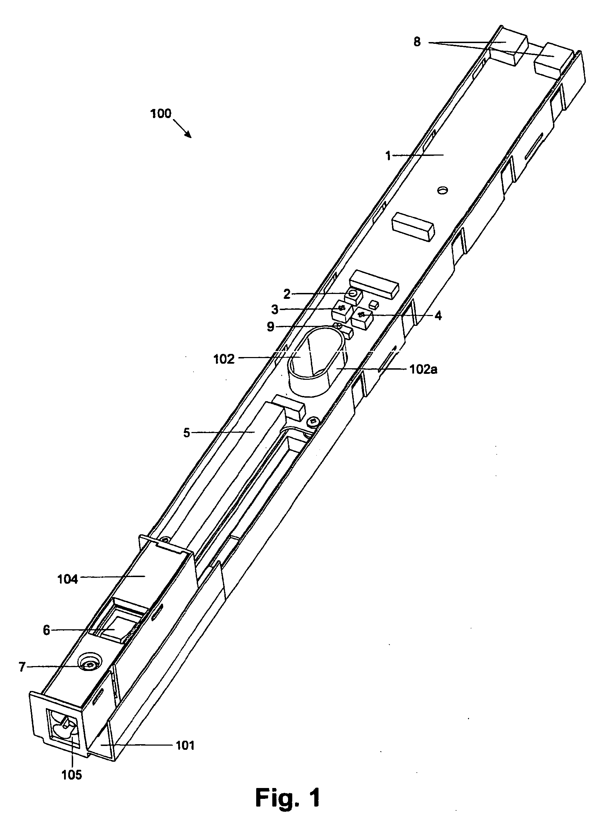

Figur 1 zeigt ein Anschlussteil 100 für eine Linearmotor-Anordnung gemäß einer Ausführungsform der Erfindung. Das Anschlussteil 100 dient einem Anschluss eines gesamten Linearantriebs nach außen. Damit ist eine Verkabelung auf dieses Teil begrenzt, sodass es nicht notwendig ist, den Linearantrieb an verschiedenen Stellen zu öffnen und Anschlüsse vorzunehmen oder Einstellungen vorzunehmen.

Das Anschlussteil 100 umfasst eine Schaltung 104, die vorzugsweise an einem Ende des Anschlussteils 100 angeordnet ist. An einer vorzugsweise Stirnseite der Schaltung 104 ist ein Netzanschluss 105 zum Anschluss eines nicht dargestellten Stromversorgungskabels vorgesehen. Ferner umfasst die Schaltung 104 vorzugsweise einen Netzschalter 6, sodass der Linearantrieb im Montagezustand ab- oder eingeschaltet werden kann.

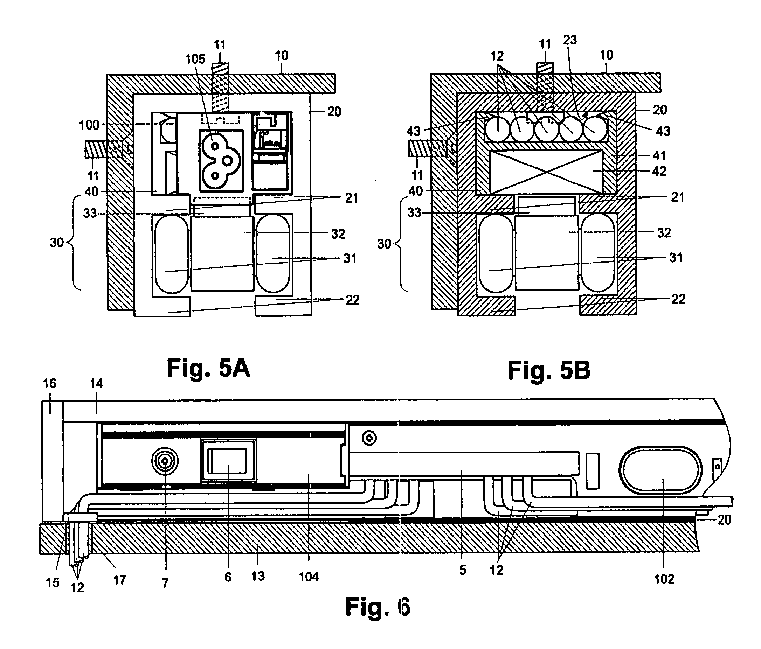

Zusätzlich kann eine Anschlussplatine 1 vorgesehen sein, die beispielsweise einen Reset-Schalter 2, Potentiometer 3, 4 zum Einstellen beispielsweise von Verfahrgeschwindigkeiten, einen Modus-Schalter 9 und/oder Anschlussklemmen 5 für zusätzliche Anschlussleitungen 12, die in Figur 6 gezeigt sind, aufweisen. Die Anschlussklemmen 5 können mit Schrauben zum Befestigen einer jeweiligen Anschlussleitung 12 vorgesehen sein.

Ferner umfasst das Anschlussteil 100 zumindest an einem, in Längsrichtung gesehen, Ende zumindest einen Anschluss 8 für ein ebenfalls nicht dargestelltes Statorteil 40 auf. Vorzugsweise ist vorgesehen, dass der Anschluss 8 mittels eines Steckverbinders gebildet ist, der in einen Buchsenverbinder im jeweiligen Statorteil 40 eingesteckt ist. Dadurch erfolgt bei einem Zusammenstecken von Anschlussteil 100 und Statorteil 40 neben einer mechanischen auch eine elektrische Verbindung. An einer dem Statorteil 40 zugewandten Ende können Rastelemente beispielsweise in Form hervorstehender Rastnasen ausgebildet sein, die in Rastaufnahmen eingreifen, die an einer dem Anschlussteil 100 zugewandten Ende des Statorteils 40 ausgebildet sind. Die Anordnung von Rastnasen und Rastaufnahmen kann auch umgekehrt oder kombiniert ausgebildet sein, sodass sowohl Anschlussteil 100 als auch Statorteil 40 Rastnasen und Rastaufnahmen aufweisen.

Vorzugsweise sind die Komponenten des Linearantriebs, die nicht an einem entlang eines Verfahrwegs bewegbaren Teil, wie beispielsweise einem Schiebetürflügel, anzubringen sind, also alle Teile des Linearantriebs abgesehen von exemplarisch in Figur 5A dargestellten Läuferteilen 30 eines Linearmotors, in einem Aufnahmeprofil 20 aufgenommen, das in Figur 5 dargestellt ist.

Das Aufnahmeprofil 20 ist üblicherweise an einer Wand oder einem Anbringprofil 10 befestigt. Die Befestigung erfolgt typischerweise mittels Befestigungsschrauben 11. Um das Aufnahmeprofil 20 befestigen zu können, sind im Anschlussteil 100 an den Befestigungsschrauben 11 entsprechenden Stellen Durchgangsöffnungen 102 ausgebildet. Im Montagezustand des Anschlussteils 100 sind somit alle Befestigungsschrauben 11 weiterhin zugänglich.

Damit keine der Befestigungsschrauben 11 in das Innere des Anschlussteils geraten und damit Probleme wie beispielsweise Kurzschlüsse hervorrufen kann, sind die Durchgangsöffnungen mit einem Wandabschnitt 102a versehen, der die Durchgangsöffnungen miteinander verbindet und zum Inneren des Anschlussteils 100 separiert. Es entsteht somit eine durchgehende hülsenförmige Ausnehmung. Dadurch ist eine insgesamt versteifte Struktur gegeben.

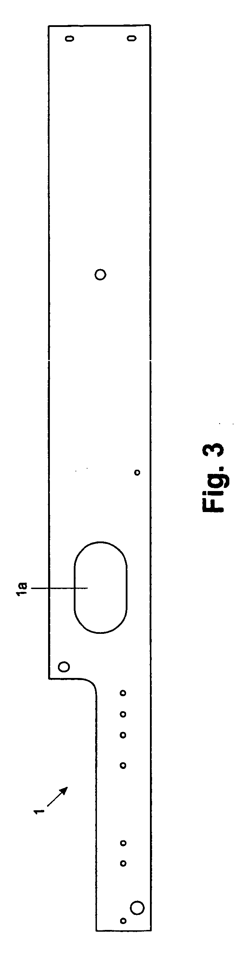

Die Platine 1 weist an den Stellen der Durchgangsöffnungen 102 ebenfalls Durchgangsöffnungen 1a auf, wie besonders gut in Figur 3 zu erkennen. Die Durchgangsöffnungen 1a sind gemäß den korrespondierenden Durchgangsöffnungen 102 im Anschlussteil 100 bzw. einer Außenkontur eines jeweiligen korrespondierenden Wandabschnitts 102a ausgebildet sind. Dadurch ist es möglich, die Platine 1 in das Anschlussteil 100 einzusetzen, sodass die Platine 1 die Durchgangsöffnungen 102 nicht verdeckt und damit Befestigungsschrauben 11 weiterhin zugänglich bleiben.

Die Schaltung 104 weist, in einer Richtung quer zu ihrer Längserstreckung gesehen, eine Abmessung auf, die kleiner als eine Innenabmessung des Anschlussteils 100 in diesem Bereich ist. Damit entsteht zwischen Filterteil 104 und Innenseite des Anschlussteils 100 ein kanalförmiger Hohlraum, der als Leitungskanal 101 zum Verlegen von Anschlussleitungen 12 zu den Anschlussklemmen 5 vorgesehen ist. Der Leitungskanal 101 erstreckt sich von einem Bereich der Anschlussklemmen 5 zu einem Ende des Anschlussteils 100, an dem der Netzanschluss 105 angeordnet ist. D. h. alle Anschlussleitungen 12, die an den Linearantrieb anzuschließen sind, können an einer einzigen Stelle mit dem Linearantrieb, nämlich über das Anschlussteil 100, gekoppelt werden. Es ist somit bauseitig nur ein Kabelkanal bzw. -schacht erforderlich, was eine bauseitige Verkabelung enorm vereinfacht.

Die Platine 1 ist vorzugsweise im Bereich der Anschlussklemmen 5 so ausgebildet, dass sie mit einer dem Leitungskanal 101 zugewandten Seite der Anschlussklemmen 5 abschließt oder nur geringfügig hervorsteht. Dadurch ist ein Leitungskanal 101 geschaffen, der vorzugsweise eine maximale Höhe des Inneren des Anschlussteils 100 einnimmt, sodass relativ viele Leitungen bzw. Kabel verlegt werden können. Figur 3 zeigt die Platine 1 als Draufsicht.

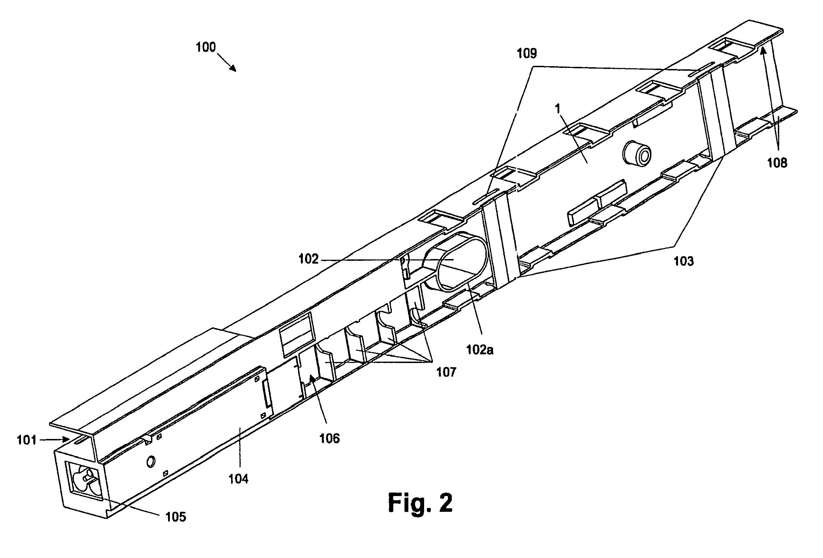

Wie in Figur 2 gezeigt, schließt sich an ein dem Netzanschluss 105 abgewandten Ende der Schaltung 104 eine Leitungsdurchführung 106 an. Diese Leitungsdurchführung 106 dient dem Verlegen von Leitungen bzw. Kabeln, die zu anderen Komponenten des Linearantriebs zu führen sind. Um die Leitungen bzw. Kabel fixiert verlegen zu können, sind Stege 107 vorgesehen bzw. ausgebildet, die Ausnehmungen aufweisen, in die Leitungen bzw. Kabel hinein gelegt und ggf. geklemmt werden. Damit ist ein knickfreies Verlegen möglich. Damit die verlegten Leitungen bzw. Kabel nicht herausfallen können, sind zusätzlich Deckelteile 103 angeordnet bzw. einstückig mit einem Gehäuse des Anschlussteils 100 ausgebildet.

Im Falle einer separaten Ausbildung stehen die Deckelteile 103 mit jeweiligen Innenseiten 108 des Anschlussteils 100 bzw. in ihnen ausgebildeten Ausnehmungen 109 in Rasteingriff. Alternativ sind sie in die Innenseiten 108 verklemmt.

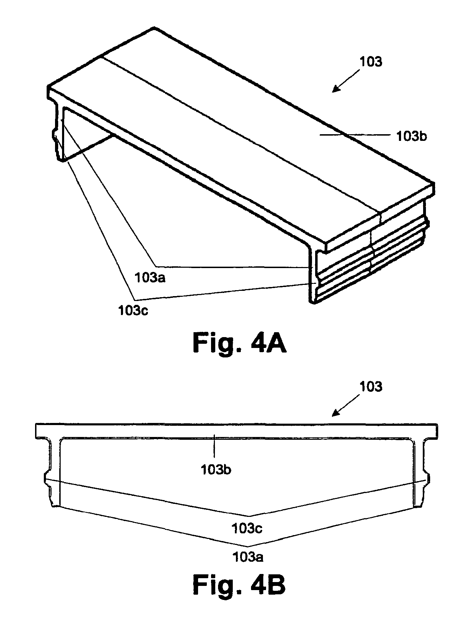

In Figur 4 ist ein Deckelteil 103 von Figur 2 vergrößert dargestellt. Im Fall des vorbeschriebenen Rasteingriffs weist das Deckelteil zwei Armabschnitte 103a auf, die sich von einem Deckelabschnitt 103b in eine selbe Richtung erstreckend hervorstehen. Jeder Armabschnitt 103a weist einen Vorsprung 103c auf, der in eine Richtung nach außen hervorsteht und sich in Richtung einer Längserstreckung des Anschlussteils 100, wenn montiert, erstreckt. Dieser Vorsprung 103c bildet vorzugsweise einen Rastvorsprung, der mit einer vorbeschriebenen Rastausnehmung 109 in Rasteingriff bringbar ist. Alternativ oder zusätzlich sind zumindest die Armabschnitte 103a aus einem in gewissen Maß elastischen Material gebildet. Bei einem Einsetzen in das Anschlussteil werden die Armabschnitte 103a nach innen, d. h. aufeinander zu, gebogen, und in Reibkontakt mit Innenseiten 108, 108 des Anschlussteils 100 gebracht und klemmen damit im Anschlussteil 100.

Figur 5 zeigt den Linearantrieb im Montagezustand von einer Stirnseite des Linearantriebs, einmal in Sicht auf das Anschlussteil 100, und einmal aus derselben Blickrichtung im Schnitt durch ein Statorteil 40 hindurch.

Gemäß Figur 5A ist das Aufnahmeprofil 20 exemplarisch am Anbringprofil 10 angebracht, das seinerseits mittels links dargestellter Befestigungsschrauben 11 an einer nicht dargestellten Wand 13 angebracht ist.

Das Aufnahmeprofil 20 ist mittels in Figur 5A in der Mitte dargestellten Befestigungsschrauben 11 angebracht. Das Aufnahmeprofil 20 weist vorzugsweise Vorsprünge 21 auf, die das Aufnahmeprofil 20 in einen (oberen) Komponenten-Aufnahmeraum und einen (unteren) Läuferteil-Aufnahmeraum auf.

Die Läuferteile 30 sind jeweils vorzugsweise mittels Läuferrollen 31 zumindest auf einer abwärts weisenden Lauffläche der Vorsprünge 21 abrollend angeordnet. Zusätzlich können im Aufnahmeprofil 20 Vorsprünge 22 ausgebildet sein, auf deren aufwärts weisenden Flächen ebenfalls Läuferrollen 31 abrollen. Zwischen des Läuferrollen 31 ist vorzugsweise ein Grundkörper 32 angeordnet, an dem die Läuferrollen 31 frei rotierbar angebracht sind. An einer dem oberen Aufnahmeraum des Aufnahmeprofils 20 zugewandten Seite ist der Grundkörper 32 mit einem Läufer versehen, der vorzugsweise mittels einer sich in Längsrichtung erstreckenden Magnetreihe 33 gebildet ist oder lediglich aus einem Teil aus einem magnetisierbaren Material gebildet ist.

Statorteile 40 sind, wie in Figur 5B gezeigt, ebenfalls im oberen Aufnahmeraum des Aufnahmeprofils 20 angeordnet bzw. aufgenommen. Wie zu erkennen, weist das Statorteil 40 vorzugsweise ein Statorprofil 41 auf, das im Querschnitt vorzugsweise H-förmig ausgebildet ist. In einer somit gebildeten unteren Ausnehmung ist ein Stator angeordnet, der aus einer Reihe von hintereinander in einer Reihe angeordneten Spulen 42 gebildet ist. Eine obere Ausnehmung des Statorprofils 41 ist vorgesehen, Anschlussleitungen 12 aufzunehmen, die von einem Ende zu einem anderen Ende des Statorteils 40 über dieses hinweg zu verlegen sind.

Um bei einem Einschieben des Statorprofils 41 in das Aufnahmeprofil 20 zu verhindern, dass Anschlussleitungen 12 mit einer oberen, abwärts weisenden Innenseite des Aufnahmeprofils 20 in Kontakt geraten und aufgrund von Reibung ggf. beschädigt werden, ist eine Abstandhalterung vorgesehen. Diese Abstandhalterung ist gemäß Figur 5B mittels zweier einander zugewandter Vorsprünge 43, 43 gebildet. Zwischen den Vorsprüngen sind Anschlussleitungen derart verlegt, dass sie einander berühren. Äußere Anschlussleitungen 12, 12 werden an einer Bewegung nach oben gehindert und können somit nicht mit einer Innenseite 23 in Kontakt geraten. Der Kontakt zwischen den Anschlussleitungen ist vorzugsweise so groß, dass auch innenliegende Anschlussleitungen an einer Bewegung insbesondere zur Innenseite 23 hin gehindert werden.

Die vorbeschriebene H-förmige Querschnittsform des Aufnahmeprofils 20 ermöglicht zum einen eine besonders geringe Höhe des Statorteils 40.

Zum anderen erlaubt dies ein besonders einfaches Verlegen der Anschlussleitungen 12.

Alternativ ist das Statorteil 40 nach oben geschlossen. D. h. der obere Aufnahmeraum ist, im Querschnitt gesehen, vollständig geschlossen.

Figur 6 zeigt das Anschlussteil 100 von Figur 1 in einer Teil-Draufsicht. Hier ist das Aufnahmeprofil 20 an einer Wand 13 angebracht. Innerhalb des Linearantriebs zu anderen Komponenten zu verlegende Leitungen 12 sind an jeweils einer Anschlussklemme 5 der Platine 1 angeschlossen. In Bezug auf den Linearantrieb externe Anschlussleitungen 12 sind in einen angedeuteten Kabelschacht 17 in der Wand 13 herausgeführt. Zum Schutz sind diese Anschlussleitungen 12 mittels eines Befestigungsstegs mechanisch festgelegt.

Das Aufnahmeprofil 20 ist im Montagezustand vorzugsweise mittels einer Blende bzw. Verkleidung 14 optisch verdeckt. Jeweils an einer Seite der Verkleidung 14 ist ferner vorzugsweise eine Endkappe 16 angebracht bzw. angeordnet. In Figur 6 ist exemplarisch nur eine Seite der Verdeckung 14 dargestellt.

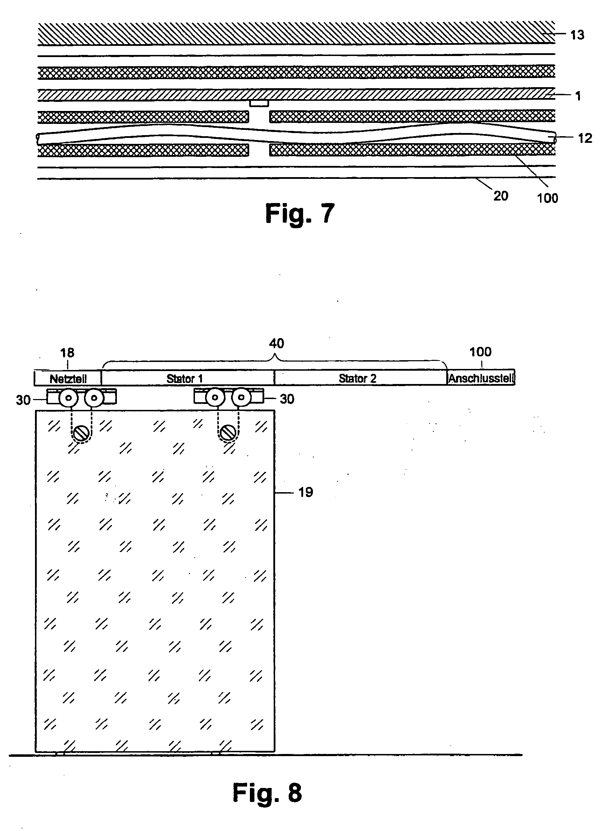

Figur 7 zeigt einen Längsschnitt durch das Anschlussteil 100, eingesetzt in ein an einer Wand 13 angebrachtes Aufnahmeprofil 20. Zwischen Platine 1 und verlegten Anschlussleitungen 12 ist vorzugsweise eine Isolationsschicht vorgesehen. Alternativ ist die Platine 1 in ein isolierendes Material eingegossen. Vorzugsweise sind die Anschlussleitungen 12 beidseitig elektrisch isoliert. In Richtung Aufnahmeprofil 20 kann die mittels einer Gehäusewand des Anschlussteils 100 erfolgen.

An einer den Anschlussleitungen 12 abgewandten Seite der Platine 1 gibt es vorzugsweise wiederum eine elektrische Isolierung, die vorzugsweise mittels einer Gehäusewand des Anschlussteils 100 gebildet ist. An Stellen, an denen auf der Platine 1 Bedienungselemente vorgesehen sind, sind in Isolierungen in Richtung Anschlussleitungen 12 in Figur 7, d. h. von der Wand 13 weg, Durchgangsöffnungen vorgesehen. Die Durchgangsöffnungen sind vorzugsweise so angeordnet, dass sie von einer der Wand abgewandten, Unterseite des Aufnahmeprofils 20, sodass diese Bedienungselemente auch im Montagezustand des Anschlussteils 100 zugänglich sind.

Figur 8 zeigt eine Schiebetüranlage mit einer Anordnung eines Linearantriebs gemäß einer Ausführungsform der Erfindung. Das Aufnahmeprofil 20 und eine etwaige Wand 13 oder ein Anbringprofil 10 sind weggelassen. Eine Schiebetür 19 ist mit Läuferteilen 30 versehen, die jeweils unter anderem eine Funktion eines Laufwagens haben. Das Anschlussteil 100 ist vorzugsweise an einer in Figur 8 rechts dargestellten Offen-Seite der Schiebetüranlage angeordnet, d. h. an einer Seite, die zum Durchgang für Passanten freigegeben wird. An einer gegenüberliegenden Geschlossen-Seite der Schiebetüranlage ist ein Netzteil 18 angeordnet. Diese Anordnung kann erforderlich sein, wenn es beispielsweise, wie in Figur 8 gezeigt, erforderlich ist, dass der Stator 40 mit seinen Statorteilen zu jedem Zeitpunkt mit beiden Magnetreihen der Läuferteile 30 in Wirkverbindung stehen muss. In dem Fall können Netzteil und Anschlussteil 100 nicht an einem Ende des Linearantriebs angeordnet werden.

Eine mit dem Anschlussteil 100 versehene Linearantriebsanordnung bietet somit enorme Freiheiten in bezug auf eine Anordnung der Komponenten des Linearantriebs und damit Anpassungsfähigkeit an verschiedene Schiebetüranlagen. Ein Anschluss von außen kann an einer einzigen Stelle erfolgen.

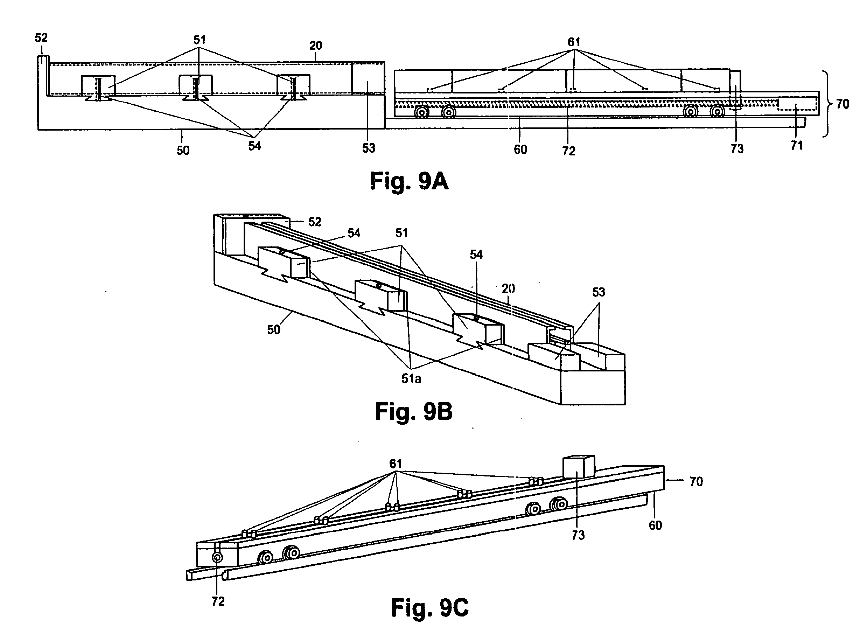

Um solch eine Linearantriebsanordnung montieren zu können, ist eine in Figur 9 dargestellte Montagevorrichtung gemäß einer Ausführungsform der Erfindung vorgesehen. Die Montagevorrichtung weist ein Teil 50 zum Arretieren, d. h. zum ortsfesten Positionieren des Aufnahmeprofils 20 für die Linearantriebsanordnung auf.

Das Aufnahmeprofil 20 ist auf dem Arretierungsteil 50 vorzugsweise mittels Klemmbacken 51 eingeklemmt und damit in Position gehalten. In Längsrichtung des Aufnahmeprofils 20 gesehen drücken die Kiemmbacken 51 vorzugsweise gegen eine jeweilige äußere Seitenwand des Aufnahmeprofils 20.

Jeder Klemmbacken 51 weist an einer dem Aufnahmeprofil 20 zugewandten Seite vorzugsweise einen Klemmbelag 51 a auf, der ein Beschädigen des Aufnahmeprofils 20 im Einklemmzustand verhindert und beispielsweise aus einem elastischen Kunststoff gebildet ist. Die Klemmbacken 51 können auch insgesamt aus solch einem Beschädigungen verhindernden Material gebildet sein.

Die Klemmbacken 51 können ortsfest am Arretierungsteil 50 angeordnet sein oder in eine Richtung quer zur Längserstreckung des Aufnahmeprofils 20 von diesem weg verschiebbar gelagert. Diese Lagerung kann beispielsweise mittels einer in Figuren 9A und 9B gezeigten Schwalbenschwanzführung erfolgen. Eine senkrecht verlaufend angeordnete Klemmschraube 54 ist vorgesehen, den jeweiligen Klemmbacken 51 in seiner Position zu arretieren, indem sich die Klemmschraube 54 vorzugsweise an einer gegenüberliegenden Innenseite der Schwalbenschwanzführung im Arretierungsteil 50 abstützt.

An einem Ende des Arretierungsteils 50 ist eine Einsetzhilfe 53 angeordnet. Die Einsetzhilfe 53 ist ein Teil, das mit einer Seite an dem Aufnahmeprofil 20 zu liegen kommt. Zu einem dem Aufnahmeprofil 20 abgewandten Ende hin weist die Einsetzhilfe zumindest eine rampenförmige Fläche auf. Diese zumindest eine rampenförmige Fläche ist in eine Richtung von dem Aufnahmeprofil 20 weg in Bezug auf das Aufnahmeprofil 20 nach außen geneigt. Vorzugsweise schließt die Einsetzhilfe 53 mit dem Ende des Arretierungsteils 50 bündig ab.

Zusätzlich kann an einem der Einsetzhilfe 53 abgewandten Ende des Arretierungsteils 50 ein Anschlag 52 in Form einer sich aufwärts erstreckenden Seitenwand ausgebildet sein, die an einer dem Aufnahmeprofil 20 zugewandten Seite vorzugsweise ebenfalls einen Klemmbelag aufweist. Sie kann mit dem Arretierungsteil 50 einstückig ausgebildet sein oder beispielsweise wie die Klemmbacken 51 diesmal in Richtung Längserstreckung des Arretierungsteils 50 verschiebbar gelagert aufgenommen sein.

Die Montagevorrichtung umfasst ferner vorzugsweise eine Einschubvorrichtung 60, die eingerichtet ist, die Komponenten des Linearantriebs aufzunehmen, die in das Aufnahmeprofil 20 einzuschieben sind. Vorzugsweise ist die Einschubvorrichtung 60 mit Rollen ausgestattet, die jeweils auf einer Führungsschiene abrollend angeordnet sind. Die Führungsschienen sind so angeordnet, dass sie sich von dem Ende des Arretierungsteils 50, an dem die Einsetzhilfe 53 angeordnet ist, weg im Wesentlichen in Richtung der Längserstreckung des Arretierungsteils 50 erstreckend angeordnet sind. Die Erstreckungsrichtung der Führungsschienen verläuft zumindest über eine Länge in Richtung der Längserstreckung des Arretierungsteils 50, sodass sichergestellt ist, dass sich die Einschubvorrichtung 60 in einem Zustand, in dem sie an die Einsetzhilfe 53 anstößt, mit ihrer Längserstreckung parallel zur Längserstreckung des Arretierungsteils 50 angeordnet ist.

Die Einschubvorrichtung 60 weist zum Aufnehmen und ortsfesten Positionieren der zu montierenden Komponenten Aufsteckabschnitte 61 vorzugsweise in Form von Stiften auf, die von einer oberen Auflagefläche der Einschubvorrichtung 60 hervorstehen. Die Komponenten weisen an korrespondierenden Stellen Aufsteck-Ausnehmungen auf.

Die Stifte sind vorzugsweise in Hervorsteh-Richtung federnd gelagert. D. h. die Stifte stehen im Normalzustand aus der Einschubvorrichtung 60 hervor.

Die Stifte sind vorzugsweise aus einem magnetisierbaren Material gebildet. Unterhalb der Stifte bzw. deren Federlagerungen sind in der Einschubvorrichtung 60 vorzugsweise Elektrospulen angeordnet, die bei Anlegen elektrischer Energie die Stifte in die Einschubvorrichtung hineinziehen, sodass dann eine jeweilige Komponente auf der Auflagefläche der Einschubvorrichtung 60 verschoben werden kann.

Um die Komponenten nicht manuell in das Aufnahmeprofil 20 schieben zu müssen, ist in der Einschubvorrichtung ferner ein Schubmechanismus 70 vorgesehen. Der Schubmechanismus 70 ist bei dem in Figur 9 gezeigten Beispiel mittels eines Spindeltriebs gebildet. Er weist einen Antriebsmotor 71 auf, dessen Abtriebswelle mit einer Gewindespindel 72 wirkverbunden bzw. einstückig ausgebildet.

Die Gewindespindel 72 ist in der Einschubvorrichtung 70 frei rotierbar gelagert aufgenommen. Auf die Gewindespindel 72 ist als Mitnehmer für eine in Bezug auf das Einschieben letzte Komponente ein Anschlagteil 73 angeordnet. Das Anschlagteil 73 weist eine Hülse mit Innengewinde auf, mittels der das Anschlagteil 73 auf die Gewindespindel 72 aufgeschraubt ist und mittels Rotierens der Gewindespindel 72 translatorisch in Richtung auf das Arretierungsteil 50 in Figur 9A zu oder von ihm weg bewegbar ist.

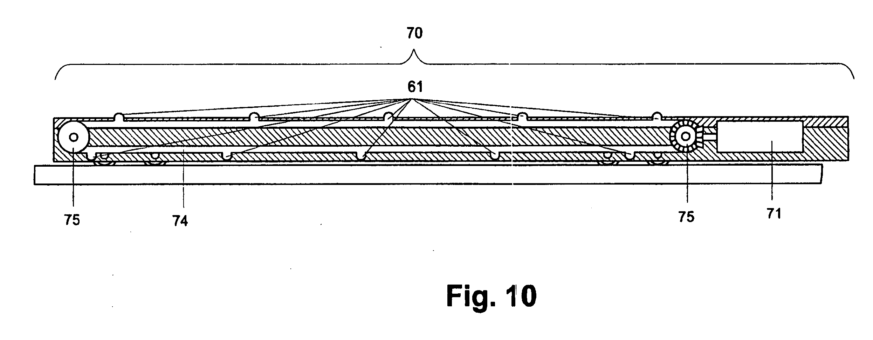

Gemäß einer alternativen, in Figur 10 gezeigten Ausführungsform der Erfindung ist die Einschubvorrichtung 70 mittels eines Zugmitteltriebs gebildet. Auf dem beispielhaft als Seil 74 dargestellten Zugmittel sind die Aufsteckabschnitte 61 ausgebildet, und zwar vorzugsweise umlaufend. Eine von zwei Seil-Umlenkrollen 75, um die das Seil 74 umlaufend gelegt ist, ist mit einem Antriebsmotor 71 wirkverbunden. Die Wirkverbindung kann beispielsweise mittels eines Kegelradgetriebes gebildet sein.

### Bezugszeichenliste

- 1: Platine
- 1 a: Durchgangsöffnung
- 2: Schalter
- 3: Potentiometer
- 4: Potentiometer
- 5: Anschlussklemmen
- 6: Netzschalter
- 7: Deckel-Befestigungsschraube
- 8: Statorteil-Anschluss
- 9: Schalter
- 10: Anbringprofil
- 11: Befestigungsschraube
- 12: Anschlussleitung
- 13: Wand
- 14: Verkleidung
- 15: Befestigungssteg
- 16: Endkappe
- 17: Kabelschacht
- 18: Netzteil
- 19: Schiebetürflügel

- 20: Aufnahmeprofil
- 21: Vorsprung
- 22: Vorsprung
- 23: Innenseite

- 30: Läuferteil
- 31: Läuferrolle
- 32: Grundkörper
- 33: Magnetreihe

- 40: Statorteil
- 41: Statorprofil
- 42: Spule
- 43: Vorsprung

- 50: Arretierungsteil
- 51: Klemmbacken
- 51 a: Klemmbelag
- 52: Anschlagteil
- 53: Einschubteil
- 54: Klemmschraube

- 60: Einschubvorrichtung
- 61: Stift

- 70: Schubmechanismus
- 71: Antriebsmotor
- 72: Gewindespindel
- 73: Mitnehmer
- 74: Seil
- 75: Umlenkrolle

- 100: Anschlussteil
- 101: Leitungskanal
- 102: Durchgangsöffnung
- 102a: Wandabschnitt
- 103: Deckelteil
- 103a: Arm
- 103b: Deckelabschnitt
- 103c: Vorsprung
- 104: Schaltung
- 105: Netzanschluss
- 106: Leitungsdurchführung
- 107: Steg
- 108: Innenseite
- 109: Ausnehmung

## Patentansprüche

1. Anordnung für einen Linearantrieb, aufweisend als hintereinander in einer Reihe angeordnete Komponenten (40, 100)
• zumindest ein Statorteil (40) eines Linearmotors und
• ein Anschlussteil (100), das
- eine Schaltung (104) und
- ein Gehäuse aufweist, das
• einerends zumindest eine Anschlussmöglichkeit (105) für eine externe Energieversorgung aufweist und
• eingerichtet ist, eine Schaltung aufzunehmen, die zusätzliche Anschlüsse (5) aufweist,
• wobei im Anschlussteil (100) ein Kanal (101) ausgebildet ist, in dem Anschlussleitungen (12) zu den zusätzlichen Anschlüssen (5) verlegbar sind und an dem Ende der Anschlussmöglichkeit (105) aus dem Gehäuse heraus geführt sind.

2. Anordnung gemäß Anspruch 1, wobei das Anschlussteil (100) zumindest an einem der Anschlussmöglichkeit (105) abgewandten Ende zumindest einen Anschluss (8) für ein Statorteil (40) des zumindest einen Linearmotors aufweist.

3. Anordnung gemäß Anspruch 1 oder 2, wobei die zumindest eine Schaltung (104) nahe der Anschlussmöglichkeit (105) angeordnet ist.

4. Anordnung gemäß einem der vorhergehenden Ansprüche, wobei das Anschlussteil (100) ferner zumindest eine Leitungsdurchführung (106) aufweist.

5. Anordnung gemäß Anspruch 4, wobei jede Leitungsdurchführung (106) Stege (107) aufweist, die sich in einem Innenraum des Anschlussteils (100) quer zu einer Längserstreckung des Anschlussteils (100) erstrecken und Ausnehmungen oder Durchgangsöffnungen aufweisen, die jeweils gemäß Außenabmessungen zu verlegender Leitungen und/oder Kabel ausgebildet sind.

6. Anordnung gemäß Anspruch 4 oder 5, wobei an jeder Leitungsdurchführung (106) an einer jeweiligen Außenseite Deckelteile (103) angeordnet sind, die die Leitungsdurchführung (106) nach außen in ihrem Bereich abdecken.

7. Anordnung gemäß Anspruch 6, wobei die Deckelteile (103) an dem Gehäuse lösbar angeordnet sind.

8. Anordnung gemäß Anspruch 7, wobei die Deckelteile (103) mittels Klemmens am Gehäuse befestigt sind.

9. Anordnung gemäß einem der vorhergehenden Ansprüche, wobei das Anschlussteil (100) an einer Offenseite einer Schiebetüranlage angeordnet ist, wobei das Ende des Anschlussteils (100) mit der Anschlussmöglichkeit (105) ein Ende des gesamten Linearantriebs bildet.

10. Anordnung gemäß Anspruch 9, wobei die Ansteuerschaltung ein anderes Ende des Linearantriebs bildet.

11. Anordnung gemäß einem der vorhergehenden Ansprüche, wobei die Komponenten (40, 100) in einem Aufnahmeprofil (20) aufgenommen sind.

12. Anordnung gemäß Anspruch 11, wobei das Aufnahmeprofil (20) Befestigungseinrichtungen für eine Montage aufweist, wobei das Anschlussteil (100) an Stellen, an denen das Aufnahmeprofil (20) Befestigungseinrichtungen aufweist, Durchgangsöffnungen (102) aufweist, die sich jeweils von einer dem Aufnahmeprofil (20) abgewandten Außenseite des Anschlussteils (100) zu einer dem Aufnahmeprofil (20) zugewandten Außenseite des Anschlussteils (100) hindurchgehend ausgebildet sind.

13. Anordnung gemäß Anspruch 12, wobei die Befestigungseinrichtungen Befestigungsöffnungen sind, durch die hindurchgehend Befestigungsschrauben (11) angeordnet sind.

14. Anordnung gemäß Anspruch 12 oder 13, wobei die Durchgangsöffnungen (101) jeweils einen umlaufenden Wandabschnitt (102a) aufweisen, der die jeweilige Durchgangsöffnung (101) von einem Innenraum des Anschlussteils (100) separiert und sich in den Innenraum des Anschlussteils (100) hinein erstreckt.

15. Anordnung gemäß einem der Ansprüche 12 bis 14, wobei die zusätzlichen Anschlüsse (5) auf einer Platine (1) angeordnet sind, die im Bereich der Durchgangsöffnungen (101) des Anschlussteils (100) Durchgangsöffnungen (1 a) aufweist.

16. Anordnung gemäß Anspruch 15, wobei auf der Platine (1) Bedienelemente (2, 3, 4, 9) angeordnet sind, wobei das Gehäuse an einer Außenseite, zu der die Bedienelemente (2, 3, 4, 9) von der Platine (1) her hin gerichtet sind, Durchgangsöffnungen aufweist.

17. Vorrichtung zum Montieren des Linearantriebs gemäß einem der Ansprüche 11 bis 16, aufweisend
• ein Arretierungsteil (50), eingerichtet, das Aufnahmeprofil (20) ortsfest zu arretieren, und
• eine Einsetzhilfe (53), die an einem den einzusetzenden Komponenten (40, 100) zugewandten Ende des Aufnahmeprofils (20) derart angeordnet ist, dass sie
- mit zumindest einer Innenfläche des Aufnahmeprofils (20) bündig ist, auf die die Komponenten (40, 100) aufgeschoben werden, und
- zu einem dem Aufnahmeprofil (20) abgewandten Ende hin zumindest eine rampenförmige Fläche aufweist, die in eine Richtung von dem Aufnahmeprofil (20) weg in Bezug auf das Aufnahmeprofil (20) nach außen geneigt ist.

18. Vorrichtung gemäß Anspruch 17, ferner aufweisend eine Einschubvorrichtung (60), eingerichtet, die Komponenten (40, 100) des Linearantriebs ortsfest aufzunehmen, wobei die Komponenten (40, 100) zumindest an einer in eine Richtung weisenden Seite Aufnahmeöffnungen aufweisen, mit denen sie auf im Querschnitt komplementär ausgebildete Aufsteckabschnitte (61) der Einschubvorrichtung (60) aufsteckbar sind.

19. Vorrichtung gemäß Anspruch 18, wobei die Aufsteckabschnitte (61) einfahrbar bzw. einziehbar ausgebildet sind.

20. Vorrichtung gemäß Anspruch 19, wobei die Aufsteckabschnitte (61) aus einem magnetisierbaren Material gebildet sind und in eine Richtung auf eine jeweilige Aufnahmeöffnung einer der Komponenten (40, 100) des Linearantriebs zu verschiebbar und in Richtung jeweiliger Aufnahmeöffnung federnd gelagert sind, wobei an einem den Aufnahmeöffnungen abgewandten Enden der Federlagerungen eine magnetisch erregbare Einrichtung derart angeordnet ist, dass ein Aktivierbaren der magnetisch erregbaren Einrichtung ein Einziehen bzw. Einfahren jeweiliger Aufsteckabschnitte (61) bewirkt.

21. Vorrichtung gemäß Anspruch 19 oder 20, ferner aufweisend eine Vorschubeinrichtung (70), die eingerichtet ist, die Komponenten (40, 100) von der Einschubvorrichtung (60) in Richtung Aufnahmeprofil (20) zu bewegen und damit in das Aufnahmeprofil (20) hineinzuschieben.

## Claims

1. An arrangement for a linear drive system, including as components (40, 100), which are consecutively disposed in a row
• at least one stator member (40) of a linear motor, and
• a connecting member (100), which
- has a circuitry unit (104), and
- a housing, which,
■ at one end, has at least one connecting possibility (105) for an external energy supply, and,
■ is adapted to receive a circuitry unit, which has additional terminals (5)
• wherein a channel (101) is configured in the connecting member (100), in which connecting lines (12) can be laid to the additional terminals (105) and exit the housing at the end of the connecting possibility (105).

2. The arrangement according to claim 1, wherein the connecting member (100), at least at an end facing away from the connecting possibility (105), has at least one terminal (8) for a stator member (40) of the at least one linear motor.

3. The arrangement according to claim 1 or 2, wherein the at least one circuitry unit (104) is disposed close to the connection possibility (105).

4. The arrangement according to one of the preceding claims, wherein the connecting member (100) furthermore has at least one lead-through for lines (106).

5. The arrangement according to claim 4, wherein, each lead-through for lines (106) has webs (107), which extend in an inner space of the connecting member (100) transversely to a longitudinal extension of the connecting member (100) and have recesses or through-openings, which are respectively configured according to exterior dimensions of the lines and/or cables to be laid.

6. The arrangement according to claim 4 or 5, wherein cover members (103) are disposed at one respective exterior face of each lead-through for lines (106), which cover the lead-through for lines (106) to the outside in their respective area.

7. The arrangement according to claim 6, wherein the cover members (103) are releasably disposed at the housing.

8. The arrangement according to claim 7, wherein the cover members (103) are attached to the housing by means of clamping.

9. The arrangement according to one of the preceding claims, wherein the connecting member (100) is preferably disposed at an open side of a sliding door installation, wherein the end of the connecting member (100) together with the connection possibility (105) form an end of the entire linear drive system.

10. The arrangement according to claim 9, wherein the control circuit forms another end of the linear drive system.

11. The arrangement according to one of the preceding claims, wherein the components (40, 100) are received in a reception profile (20).

12. The arrangement according to claim 11, wherein the reception profile (20) has attachment devices for mounting, wherein, at locations at which the reception profile (20) has attachment devices, the connecting member (100) has through-openings (102), which, respectively from an exterior side of the connecting member (100) facing away from the reception profile (20), are configured to pass through to an exterior side of the connecting member (100) facing the reception profile (20).

13. The arrangement according to claim 12, wherein the attachment devices consist of attachment openings, the attachment screws (11) being disposed such as to pass therethrough.

14. The arrangement according to claim 12 or 13, wherein the through-openings (102) have respectively a surrounding wall section (102a), which separates the respective through-opening (102) from an inner space of the connecting member (100) and extends into the inner space of the connecting member (100).

15. The arrangement according to one of the claims 12 to 14, wherein the additional terminals (5) are disposed on a circuit board (1), which has through-openings (1 a) in the area of the through-openings (102) of the connecting member (100).

16. The arrangement according to claim 15, wherein operating elements (2, 3, 4, 9) are disposed on the circuit board (1), wherein, on an exterior side to which the operating elements (2, 3, 4, 9) are oriented from the circuit board (1), the housing has through-openings.

17. A device for mounting the linear drive system according to one of the claims 11 to 16, including
• an arresting member (50), which is adapted to stationarily arrest the reception profile (20), and
• an inserting assistance (53), which is disposed in such a way at an end of the reception profile (20) facing towards the components to be inserted, that it
- is flush with at least one inner surface of the reception profile (20), onto which inner surface the components are pushed, and
- towards an end facing away from the reception profile (20), it has at least one ramp-shaped surface, which is inclined to the outside with regard to the reception profile (20) in a direction away from the reception profile (20).

18. The device according to claim 17, furthermore having a slide-in device (60) adapted to stationarily receive the components (40, 100) of the linear drive system, wherein the components (40, 100) have reception openings at least at one side pointing in one direction, by means of which they can be slipped on slip-on sections (61) of the slide-in device (60), which, in cross-section, are complementarily configured.

19. The device according to claim 18, wherein the slip-on sections (61) are configured to be retractable, or can be moved in.

20. The device according to claim 19, wherein the slip-on sections (61) are made from a magnetizable material and are disposed to be displaceable in a direction towards a respective reception opening of one of the components (40, 100) of the linear drive system and are resiliently supported in the direction of the respective reception opening, wherein, at an end of the spring supports facing away from the reception openings, a magnetically excitable device is disposed such that activating the magnetically excitable device causes a retraction, respectively moving-in of the respective slip-on sections (61).

21. The device according to claim 19 or 20, furthermore having an advance device (70), which is adapted to move the components (40, 100) from the slide-in device (60) in the direction of the reception profile (20) and thus to move them into the reception profile (20).

## Revendications

1. Agencement pour un entraînement linéaire, comprenant comme composants (40, 100) agencés en une rangée l'un après l'autre
• au moins un membre de stator (40) d'un moteur linéaire, et
• un membre de raccordement (100), qui
- comprend un circuit (104), et
- un boîtier, qui
■ à une extrémité, comprend au moins une possibilité de raccordement (105) à une alimentation en énergie, et
■ est adaptée à accommoder un circuit qui comprend des connexions (5) supplémentaires,
• un canal (101) étant aménagé dans le membre de raccordement (100), dans lequel canal des lignes de raccordement (12) peuvent être posées vers les connexions (5) supplémentaires et sortent du boîtier à l'extrémité de la possibilité de raccordement (105).

2. Agencement selon la revendication 1, dans lequel le membre de raccordement (100), à une extrémité détournée de la possibilité de raccordement (105), comprend au moins une connexion (8) pour un membre de stator (40) dudit au moins un moteur linéaire.

3. Agencement selon la revendication 1 ou 2, dans lequel ledit au moins un circuit (104) est agencé tout près de la possibilité de raccordement (105).

4. Agencement selon l'une des revendications précédentes, dans lequel le membre de raccordement (100) comprend en outre au moins une traversée de ligne (106).

5. Agencement selon la revendication 4, dans lequel chaque traversée de ligne (106) comprend des barrettes (107), qui s'étendent dans un compartiment intérieur du membre de raccordement (100) perpendiculairement à une extension longitudinale du membre de raccordement (100) et présentent des évidements ou trous de passage, qui sont respectivement aménagés selon des dimensions extérieures des lignes et/ou câbles à poser.

6. Agencement selon la revendication 4 ou 5, dans lequel des membres de couvercle (103) sont agencés sur une face extérieure respective de chaque traversée de ligne (106), lesquels masquent la traversée de ligne (106) vers l'extérieur dans leur région respective.

7. Agencement selon la revendication 6, dans lequel les membres de couvercle (103) sont agencés de façon amovible sur le boîtier.

8. Agencement selon la revendication 7, dans lequel les membres de couvercle (103) sont fixés par serrage au boîtier.

9. Agencement selon l'une des revendications précédentes, dans lequel le membre de raccordement (100) est agencé sur une face ouverte d'un système de porte coulissante, une extrémité du membre de raccordement (100) avec la possibilité de raccordement (105) constituant une extrémité de l'ensemble de l'entraînement linéaire.

10. Agencement selon la revendication 9, dans lequel le circuit d'amorçage constitue une autre extrémité de l'entraînement linéaire.

11. Agencement selon l'une des revendications précédentes, dans lequel les composants (40, 100) sont accommodés dans un profilé de réception (20).

12. Agencement selon la revendication 11, dans lequel le profilé de réception (20) présente des dispositifs de fixation pour une installation, alors que le membre de raccordement (100) présente des trous de passage (102) aux endroits où le profilé de réception (20) présente les dispositifs de fixation, lesquels trous sont respectivement aménagés de façon traversante à partir d'une face extérieure du membre de raccordement (100) détournée du profilé de réception (20) et vers une face extérieure du membre de raccordement (100) tournée vers le profilé de réception (20).

13. Agencement selon la revendication 12, dans lequel les dispositifs de fixation sont des trous de fixation, des écrous de fixations (11) étant agencés de façon à passer à travers ces trous.

14. Agencement selon la revendication 12 ou 13, dans lequel les trous de passage (102) présentent respectivement une partie de paroi (102a) entourante, qui sépare le trou de passage (102) respectif d'un compartiment intérieur du membre de raccordement (100) et s'étend dans le compartiment intérieur du membre de raccordement (100).

15. Agencement selon l'une des revendications 12 à 14, dans lequel les connexions (5) supplémentaires sont agencées sur une platine (1) qui, dans la région des trous de passage (102) du membre de raccordement (100), présente des trous de passage (1 a).

16. Agencement selon la revendication 15, dans lequel des éléments de commande (2, 3, 4, 9) sont agencés sur la platine (1), le boîtier présentant des trous de passage sur une face extérieure vers laquelle les éléments de commande (2, 3, 4, 9) sont orientés à partir de la platine (1).

17. Dispositif pour monter l'entraînement linéaire selon l'une des revendications 11 à 16, comprenant
• un membre de blocage (50) qui est adapté à bloquer le profilé de réception (20) de façon stationnaire, et
• un dispositif assistant à l'insertion (53), qui est agencé à une extrémité du profilé de réception (20) tournée vers les composants (40, 100) à insérer de telle façon qu'il
- est à fleur avec au moins une surface intérieure du profilé de réception (20) sur laquelle les composants (40, 100) sont glissés, et
- vers une extrémité détournée du profilé de réception (20), il présente au moins une surface en forme de rampe, qui est inclinée vers l'extérieur par rapport au profilé de réception (20), dans une direction s'éloignant du profilé de réception (20).

18. Dispositif selon la revendication 17, comprenant en outre un dispositif d'insertion (60) qui est adapté à recevoir les composants (40, 100) de l'entraînement linéaire de façon stationnaire, les composants (40, 100), au moins sur une face orientée vers une direction, comprenant des trous de réception par lesquels les composants peuvent être embrochés sur des parties à embrochement (61) du dispositif d'insertion (60) qui sont aménagées de façon complémentaire en coupe transversale.

19. Dispositif selon la revendication 18, dans lequel les parties à embrochement (61) sont aménagées de façon rétractable respectivement escamotable.

20. Dispositif selon la revendication 19, dans lequel les parties à embrochement (61) sont faites de matière magnétisable et sont déplaçables dans une direction envers un trou de réception respectif d'un des composants (40, 100) de l'entraînement linéaire et sont supportées par ressorts en direction du trou de réception respectif, à une extrémité des brides de ressort formant palier détournée des trous de réception, un dispositif excitable par aimants étant agencé de telle façon que l'activation du dispositif excitable par aimants fait en sorte que les parties à embrochement (61) respectives se rétractent ou s'escamotent.

21. Dispositif selon la revendication 19 ou 20, comprenant en outre un dispositif d'avancement (70) qui est adapté à déplacer les composants (40, 100) à partir du dispositif d'insertion (60) en direction du profilé de réception (20) et par ce faire à les insérer dans le profilé de réception (20).
